# EUROPÄISCHE PATENTSCHRIFT

(11) **EP 2 721 616 B1**
(45) Veröffentlichungstag und Bekanntmachung des Hinweises auf die Patenterteilung: **17.01.2018**
(21) Anmeldenummer: 12755999.5
(22) Anmeldetag: 03.09.2012
(51) Int. Cl.: H01B 3/40, C08K 3/22, C08K 3/36, C08K 5/541, H02K 3/30, H02K 3/40, B82Y 30/00, H01F 41/06, H01F 41/12

(54) **ISOLIERSYSTEME MIT VERBESSERTER TEILENTLADUNGSBESTÄNDIGKEIT, VERFAHREN ZUR HERSTELLUNG DAZU**
INSULATION SYSTEMS WITH IMPROVED RESISTANCE TO PARTIAL DISCHARGE, PRODUCTION METHOD FOR THIS
SYSTÈMES ISOLANTS À RÉSISTANCE ACCRUE AUX DÉCHARGES PARTIELLES ET LEUR PROCÉDÉ DE FABRICATION

(30) Priorität: 26.09.2011 DE 102011083409
(43) Veröffentlichungstag der Anmeldung: 23.04.2014
(73) Patentinhaber: Siemens Aktiengesellschaft, 80333 München (DE)
(72) Erfinder: GRÖPPEL, Peter, 91052 Erlangen (DE); HEINL, Dieter, 91085 Weisendorf (DE); MEICHSNER, Christian, 96155 Buttenheim (DE); RITBERG, Igor, 90762 Fürth (DE)
(86) Internationale Anmeldenummer: PCT/EP2012/067116
(87) Internationale Veröffentlichungsnummer: WO 2013/045212

(56) Entgegenhaltungen:
- EP-A1- 2 058 366
- WO-A1-2008/129032
- WO-A2-2011/131537
- DE-A1- 10 345 139

## Beschreibung

Die vorliegende Erfindung betrifft allgemein das Gebiet der Isolierung von elektrischen Leitern gegen Teilentladung und im Speziellen ein Verfahren zur Herstellung eines Isoliersystems mit verbesserter Teilentladungsbeständigkeit und ein Isoliersystem mit verbesserter Teilentladungsbeständigkeit.

In rotierenden elektrischen Maschinen, wie Motoren oder Generatoren, ist die Zuverlässigkeit des Isoliersystems maßgeblich für deren Betriebssicherheit verantwortlich. Das Isoliersystem hat die Aufgabe, elektrische Leiter (Drähte, Spulen, Stäbe) dauerhaft gegeneinander und gegen das Ständerblechpaket oder die Umgebung elektrisch zu isolieren. Innerhalb einer Hochspannungsisolierung unterscheidet man die Isolierung zwischen Teilleitern (Teilleiterisolierung), zwischen den Leitern bzw. Windungen (Leiter- bzw. Windungsisolierung) und zwischen Leiter und Massepotenzial im Nut- und Wickelkopfbereich (Hauptisolierung). Die Dicke der Hauptisolierung ist sowohl der Nennspannung der Maschine, als auch den Betriebs- und Fertigungsbedingungen angepasst. Die Wettbewerbsfähigkeit zukünftiger Anlagen zur Energieerzeugung, deren Verteilung und Nutzung hängt in entscheidendem Maße von den eingesetzten Materialien und angewandten Technologien zur Isolation ab.

Das grundlegende Problem bei derartig elektrisch belasteten Isolatoren liegt in der sog. teilentladungsinduzierten Erosion mit sich ausbildenden sogenannten "Treeing"-Kanälen, die letztendlich zum elektrischen Durchschlag des Isolators führen.

Bei Hoch- und Mittelspannungsmaschinen werden heute sogenannte imprägnierte geschichtete Glimmerisolierungen eingesetzt. Dabei werden die aus den isolierten Teilleitern hergestellten Formspulen und Leiter mit Glimmerbändern umwickelt und vorzugsweise in einem Vakuum-Druck-Imprägnierungs-Prozess (VPI-Prozess) mit Kunstharz imprägniert. Der Verbund von Imprägnierharz und dem Trägerband des Glimmers liefert die heutige mechanische Festigkeit sowie die geforderte Teilentladungsresistenz der elektrischen Isolierung.

Glimmerpapier wird entsprechend den Bedürfnissen der elektrotechnischen Industrie in ein stabileres Glimmerband umgewandelt. Dies erfolgt durch die Verklebung des Glimmerpapiers mit einem Trägerwerkstoff, der eine große mechanische Festigkeit aufweist, durch einen Kleber. Der Kleber zeichnet sich vorzugsweise dadurch aus, dass er bei Raumtemperatur eine hohe Festigkeit aufweist, um die Verbindung von Glimmer und Träger sicher zu stellen und bei erhöhten Temperaturen (60°C - 150°C) in einen flüssigen Zustand übergeht. Dies ermöglicht dessen Applikation als Klebstoff bei erhöhter Temperatur in flüssiger Form oder im Gemisch mit einem leichtflüchtigen Lösungsmittel. Nach Abkühlung oder Abzug des Lösungsmittels liegt der Kleber in fester aber dennoch flexibler Form vor und ermöglicht beispielsweise die Applikation des Glimmerbandes um Röbelstäbe bestehend aus Teilleitern und Formspulen bei Raumtemperatur, wobei die Klebeigenschaften des Klebers verhindern dass es zur Delamination des Glimmerpapiers vom Trägermaterial kommt. Das so entstandene Glimmerband wird in mehreren Lagen um elektrische Leiter gewickelt.

Bei Hoch- und Mittelspannungsmotoren und -generatoren werden geschichtete Glimmerisolierungen eingesetzt. Dabei werden die aus den isolierten Teilleitern hergestellten Formspulen mit Glimmerbändern umwickelt und vorrangig in einem Vakuum-Druck-Prozess (VPI = vacuum pressure impregnation) mit Kunstharz imprägniert. Dabei wird Glimmer in Form von Glimmerpapier eingesetzt, wobei im Rahmen der Imprägnierung die im Glimmerpapier zwischen den einzelnen Partikeln befindlichen Hohlräume mit Harz gefüllt werden. Der Verbund von Imprägnierharz und Trägermaterial des Glimmers liefert die mechanische Festigkeit der Isolierung. Die elektrische Festigkeit ergibt sich aus der Vielzahl der Feststoff-Feststoff-Grenzflächen des verwendeten Glimmers. Die so entstandene Schichtung aus organischen und anorganischen Materialien bildet mikroskopische Grenzflächen, deren Beständigkeit gegen Teilentladungen und thermische Beanspruchungen von den Eigenschaften der Glimmerplättchen bestimmt wird. Durch den aufwendigen VPI-Prozess müssen auch kleinste Hohlräume in der Isolierung mit Harz ausgefüllt werden, um die Anzahl innerer Gas-Feststoff-Grenzflächen zu minimieren.

Zur zusätzlichen Verbesserung der Beständigkeit wird der Einsatz von nanopartikulären Füllstoffen beschrieben.

Der Verbund von Imprägnierharz und dem Trägerband des Glimmers liefert die heutige mechanische Festigkeit sowie die geforderte Teilentladungsresistenz der elektrischen Isolierung.

Neben dem VPI Verfahren gibt es auch die Resin Rich Technologie zur Herstellung und Imprägnierung des Glimmerbandes, also des Isolierbandes und dann folgend des Isoliersystems.

Der Hauptunterschied zwischen beiden Technologien ist der Aufbau und die Herstellung des eigentlichen Isoliersystems der Spulen. Während das VPI System erst nach der Tränkung und nach dem Aushärten der Wicklung im Umluftofen fertig ist, stellt der separat unter Temperatur und Druck ausgehärtete Schenkel der Resin-Rich Spule bereits vor dem Einbau in den Stator ein funktionierendes und prüfbares Isoliersystem dar.

Der VPI-Prozess arbeitet mit porösen Bändern, welche sich unter Vakuum und anschließender Beaufschlagung des Tränkbehälters mit Überdruck nach dem Aushärten im Umluftofen zu einem festen und kontinuierlichem Isoliersystem ausbildet.

Im Gegensatz dazu ist die Herstellung von Resin-Rich Spulen aufwändiger, da jeder Spulenschenkel oder Wicklungsstab einzeln in speziellen Backpressen hergestellt werden muss, was zu einer spezifischen Erhöhung der Kosten der einzelnen Spule führt. Hierbei kommen Glimmerbänder zum Einsatz, die mit einem polymeren Isolierstoff imprägniert sind, der sich in einem sog. B-Zustand befindet. Dies bedeutet, dass das Polymer, zumeist aromatische Epoxidharze (BADGE, BFDGE, epoxidierte Phenolnovolake, epoxidierte Kresolnovolake und Anhydride oder Amine als Härter), teilweise vernetzt ist und somit einen klebfreien Zustand aufweist, aber bei nochmaliger Erwärmung erneut aufschmelzen und abschließend ausgehärtet werden kann um somit in die endgültige Form gebracht zu werden. Da das Harz in einem Überschuss eingebracht wird, kann es bei der abschließenden Verpressung in alle Hohlräume und Kavitäten fließen, um die entsprechende Isolierqualität zu erreichen. Überschüssiges Harz wird durch den Pressvorgang aus der Vorlage gepresst.
Aus der Literatur ist bekannt, dass der Einsatz nanopartikulärer Füllstoffe in polymeren Isolierstoffen zu signifikanten Verbesserungen der Isolierung bzgl. der elektrischen Lebensdauer führt.
Nachteilig an den bekannten Systemen, insbesondere derer auf Basis von Epoxidharzen, ist der schnelle Abbau der polymeren Matrix unter Teilentladungsbeanspruchung, der hier als Erosion bezeichnet wird. Durch die Implementierung der Polymermatrix mit erosionsbeständigen Nanopartikeln (Aluoxid, Siliziumdioxid) kommt es zu deren Freilegung, hervorgerufen durch einsetzende Auflösung des Polymers, so genannte Polymerdegradation.
Der vorliegenden Erfindung liegt die Aufgabe zugrunde, ein Isoliersystem mit verbesserter Teilentladungsbeständigkeit zu ermöglichen.
Gemäß einem Aspekt der Erfindung wird ein Verfahren zur Herstellung eines Isoliersystems mit verbesserter Teilentladungsbeständigkeit gemäß Anspruch 1 vorgestellt folgende Verfahrensschritte umfassend:
- Bereitstellen eines Isolierbandes welches ein Glimmerpapier und einen Trägerwerkstoff umfasst, die mittels eines Klebers miteinander verklebt sind,
- Umwickeln eines elektrischen Leiters mit dem Isolierband und
- Imprägnieren des um den Leiter gewickelten Isolierbandes mit Kunstharz, wobei das Kunstharz einen nanopartikulären Füllstoff umfasst, dadurch gekennzeichnet, dass der nanopartikuläre Füllstoff zumindest bimodal vorliegt.
Unter "bimodal" wird vorliegend verstanden, dass der nanopartikuläre Füllstoff in zwei verschiedenen Fraktionen vorliegt, wobei die Fraktionen aus zwei verschiedenen Materialien und/oder aus zwei verschiedenen Größen des nanopartikulären Füllstoffs gebildet sein können.
Gemäß einem bevorzugten Aspekt der Erfindung liegen die beiden Fraktionen aus gleichem Material und unterschiedlicher Größe vor. Bevorzugt ist dabei, dass die beiden Fraktionen sich signifikant in ihren durchschnittlichen Größen unterscheiden, das heisst, dass zumindest 5nm oder mehr Unterschied zwischen dem Minimum der größeren Fraktion und dem Maximum der kleineren Fraktion besteht. Beispielsweise wird der bimodale nanopartikuläre Füllstoff aus einer Fraktion Nanopartikel gebildet, die im Durchschnitt einen Partikeldurchmesser von 10 bis 50 nm haben, bevorzugt von 12 bis 40nm und insbesondere bevorzugt von 15 bis 30 nm und einer zweiten Fraktion Nanopartikel, die im Durchschnitt einen Partikeldurchmesser kleiner 7 nm, bevorzugt kleiner 5nm, haben.
Gemäß einem weiteren Aspekt der Erfindung wird ein Isoliersystem mit verbesserter Teilentladungsbeständigkeit gemäß Anspruch 2 vorgestellt, das ein um einen elektrischen Leiter gewickeltes Isolierband hat, welches ein mit einem Trägerwerkstoff verbundenes Glimmerband umfasst, wobei das Isolierband mit einem Harz imprägniert ist, dadurch gekennzeichnet, dass das imprägnierte Isolierband mit einem nanopartikulären Füllstoff durchsetzt ist, der zumindest bimodal vorliegt.

Es ist bekannt, dass anorganische Partikel, im Gegensatz zum polymeren Isolierstoff, nicht oder in nur sehr eingeschränktem Umfang unter Teilentladungseinwirkung geschädigt oder zerstört werden. Dabei ist die resultierende erosionsinhibierende Wirkung der anorganischen Partikel unter anderem vom Partikeldurchmesser und der sich daraus generierenden Partikeloberfläche abhängig. Dabei zeigt sich, dass je größer die spezifische Oberfläche der Partikel ist, desto größer ist die erosionsinhibierende Wirkung auf die Partikel. Anorganische Nanopartikel weisen sehr große spezifische Oberflächen mit 50 g/m2 oder mehr auf.

Dieser Zusammenhang wurde im Multi Core Modell von Prof. Tanaka in Tanaka et al., Dependence of PD Erosion Depth on the Size of Silica Fillers; Takahiro Imai*, Fumio Sawa, Tamon Ozaki, Toshio Shimizu, Ryouichi Kido, Masahiro Kozako and Toshikatsu Tanaka; Evaluation of Insulation Properties of Epoxy Resin with Nano-scale Silica Particles Toshiba Research Cooperation, erstmals festgestellt.

Generell zeigt ein ungefüllter oder glimmerbasierter Isolierstoff auf Basis von Epoxidharzen unter Teilentladungsbeanspruchung einen schnellen Abbau der polymeren Matrix. Durch die Implementierung der Polymermatrix mit erosionsbeständigem nanopartikulärem Füllstoff (Aluoxid, Siliziumdioxid) kommt es zur Freilegung des nanopartikulärem Füllstoffs, hervorgerufen durch Polymerdegradation.

Mit zunehmender Erosionsdauer erfolgt allmählich die Ausbildung einer fest anhaftenden, flächigen Schicht an der Prüfkörperoberfläche, bestehend aus freigelegtem nanopartikulärem Füllstoff. Durch diese durch das erodierte Polymer hervorgerufene Partikelvernetzung des nanopartikulärem Füllstoffes entsteht eine Passivierung der Oberfläche und das Polymer unter der Passivierungsschicht wird effektiv vor weiterer Erosion unter Teilentladungsbeanspruchung geschützt.

Überraschend wurde festgestellt, dass durch den Einsatz von bimodalen nanopartikulären Füllstoffen im Kunstharz, insbesondere von zwei Fraktionen, die sich hinsichtlich ihrer durchschnittlichen Partikelgröße signifikant unterscheiden eine verbesserte Erosionsinhibierung erreicht werden konnte.

Es konnte gezeigt werden, dass der Einsatz von mindestens zwei verschiedenen Fraktionen an Nanopartikeln, die sich signifikant in ihrem Partikeldurchmesser unterscheiden, zu Nanocompositen führt, die eine besonders ausgeprägte Erosionsbeständigkeit aufweisen. Dies ist begründet in der vereinfachten Ausbildung von Passivierungsschichten, insbesondere in Gegenwart von Haftvermittlern. Unter dem Einfluss von Teilentladungen kommt es zu einer Agglomeration der Nanopartikel durch chemische oder physikalische Prozesse, die in einer passivierenden Schutzschicht endet. Durch die Kombination zweier verschieden dimensionierter Nanopartikel wird dieser Prozess unterstützt, da die Nanopartikel mit geringerem Durchmesser und dementsprechend vergrößerter aktiver Oberfläche unter TE-Einfluss die Agglomeration der größeren Nanopartikel unterstützt und dadurch eine extrem erosionsresistente Schicht entsteht.

Im Folgenden sind mögliche Grundprinzipien für eine vorteilhaft verbesserte Erosionsbeständigkeit durch den Einsatz von bimodalen nanopartikulärem Füllstoff in der Harzformulierung erläutert: Zum einen kann die Konzentration an Nanopartikeln mit geringem Durchmesser niedrig gehalten werden, was sowohl wirtschaftlich als auch aus chemischer und verarbeitungstechnischer Sicht wertvoll ist, da Eigenschaften wie Viskosität, Reaktivität und Lagerstabilität besser kontrolliert werden können und zum zweiten können die positiven Eigenschaften, wie zum Beispiel die große spezifische Oberfläche kleinerer Nanopartikel, genutzt werden.

Erfindungsgemäß ergeben sich besonders vorteilhafte Ausführungsformen mit Reaktivharzformulierungen die aus folgenden Komponenten aufgebaut sind:

Die Harzbasis bildet beispielsweise ein Epoxidharz und/oder ein Polyurethanharz.

Der Härter umfasst als funktionelle Gruppe z.B. ein Anhydrid, ein aromatisches Amin und/oder ein aliphatisches Amin

Der nanopartikuläre Füllstoff ist bevorzugt ein Material auf der Basis von Siliziumdioxid und/oder Aluminiumoxid (Al₂O₃) und ist zumindest bimodal, das heißt, er liegt in zwei Fraktionen vor.

Bevorzugt handelt es sich um zwei Fraktionen, die sich hinsichtlich der Partikelgröße unterscheiden. Bevorzugt liegt die Fraktion der größeren Partikel in höherer Konzentration vor als die kleinere Fraktion. Insbesondere als vorteilhaft hat sich eine Kombination aus einem nanopartikulärem Füllstoff mit einer Partikelgröße zwischen 10 und 50 nm in einer Konzentration von 10 bis 50 Gew% im Kunstharz zusammen mit einer Fraktion aus nanopartikulärem Füllstoff mit einer Partikelgröße zwischen 1 und 5 nm in einer Konzentration zwischen 1 und 10 Gew% erwiesen.

Das Materialspektrum der verwendbaren nanopartikulären Füllstoffe ist sehr breit. Grundsätzlich können alle sinterfähigen Materialien hier eingesetzt werden.

Weitere Füllstoffe, Additive, Pigmente können enthalten sein.

Als Haftvermittler dient bevorzugt eine organische Siliziumverbindung, wie ein Organosilan und/oder POSS. Diese liegen - wiederum bevorzugt - mit einer Konzentration zwischen 0,1 und 45 Gew.-%, insbesondere von 1 - 25 Gew.-%, im Kunstharz vor.

Der Einsatz von Haftvermittlern wie organischen Siliziumverbindungen in Form einer Beschichtung der Füllstoffe zugesetzt werden oder auch als Teil der Harzformulierung in Kombination mit den genannten Komponenten. Das letztere bietet folgenden Vorteil, dass der Einsatz von Haftvermittler, also beispielsweise Silan als Teil des Reaktivharzes in höheren Konzentrationen möglich ist, als beim Einsatz von Silanen als Haftvermittlern der Partikel vor der Zugabe zum Reaktionsharz.

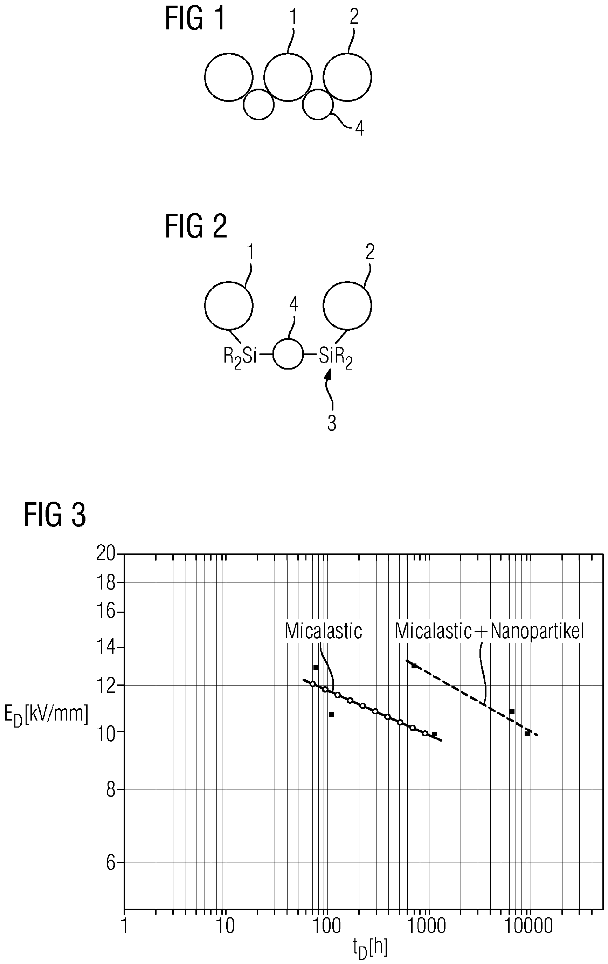

Figur 1 zeigt schematisch einen generellen Mechanismus für eine in-situ Versinterung am Beispiel eines bimodalen nanopartikulären Füllstoffs.

Durch die Kombination verschiedener Partikelgrößen ergeben sich versinterte Schichten wie in Figur 1 graphisch dargestellt. Hieraus wird ersichtlich, dass sich somit Schichten mit einer höheren Dichte erzeugen lassen, was sich letztlich in einer verbesserten Erosionsresistenz äußert.

In Figur 2 wird die Versinterung bimodaler Nanopartikel an der Oberfläche der Partikel über die funktionellen Gruppen des Haftvermittlers gezeigt. Im vorliegenden Beispiel ist der Haftvermittler ein Silan, bei dem R₁=Hydroxy, Alkoxy, Halogen, Glycidoxy sein kann und R₂=Alkyl, Glycidoxy, Vinyl, Propylbernsteinsäureanhydrid, Methacryloxypropyl.

Figur 2 zeigt die Substitution der Reste R₁ am Silan durch Nanopartikel verschiedener Fraktionen. R₂ kann auch amidisch, sulfidisch, oxidisch oder H sein. "Amidisch, oxidisch und sulfidisch bedeutet dabei, dass weitere organische Reste R'₂ über Stickstoff, Sauerstoff oder Schwefel am Silizium gebunden vorliegen.

Die großen Partikel 1 und 2 werden wie Reste R_{1/2} am Siliziumkern 3 gebunden und befinden sich deshalb in unmittelbarer Näher zueinander und zum kleinen Partikel 4. So sind sie über den Siliziumkern 3 vernetzt.

Diese in-situ Versinterung findet an der Oberfläche der Partikel statt. Die an diesem Prozess teilnehmenden funktionellen Gruppen können zum Beispiel aus der Reihe der Hydroxy, Alkoxy, Alkyl, Vinyl und Glycidoxy Verbindungen stammen. Unter diesen hochenergetischen Bedingungen ergibt sich jedoch keine Einschränkung der Oberflächenfunktionalisierung, so dass generell davon auszugehen ist, das sämtliche an der Oberfläche lokalisierten funktionellen Gruppen an der Versinterung beteiligt sind.

In Tests werden die Vorteile beim Einsatz zumindest bimodal verteilter nanopartikulärer Füllstoffe in Kombination mit den aktuell eingesetzten Isolationsmaterialien auf Basis von Glimmer erforscht. Hierzu wird die Lebensdauer von Versuchsprobekörpern, die in verkleinerter Form dem Stand der Technik bzgl. isolierter Cu-Leiter in Statoren von Wasserkraft- oder Turbogeneratoren entsprechen, unter elektrischer Feldbelastung bis zum elektrischen Durchschlag gemessen. Da die elektrische Festigkeit des Isoliersystems bei Betriebsbeanspruchung mehrere Jahrzehnte beträgt, erfolgen die elektrischen Dauertests bei mehrfach überhöhten elektrischen Feldstärken.

Die in den Figuren gezeigten Grafiken stellen die Mittelwerte der elektrischen Lebensdauer von jeweils sieben Probekörpern bei drei verschiedenen Feldbelastungen für jeweils ein Standardisolationssystem (Glimmer) und ein nanopartikulär/silan gefülltes Isolationssystem dar. Die ungefüllten Systeme (Bezeichnung Micalastic) weisen dabei einen Anteil von ca. 50 Gew.-% Glimmer und 50 Gew.-% Harz auf. Der angegebene Anteil an Nanopartikeln reduziert entsprechend den Anteil an Harz. Der Anteil Glimmer bleibt jeweils konstant.

In den Figuren 3 bis 5 werden jeweils Referenzproben die Versuchsprobekörper sind (durch unterbrochene Linien mit Kreisen dazwischen dargestellt), Ausführungsformen der Erfindung gegenübergestellt. Die Versuchskörper entsprechen in verkleinerter Form dem Stand der Technik hinsichtlich isolierter Cu-Leitern in Statoren von Wasserkraft- oder Turbogeneratoren. Sie werden unter elektrischer Feldbelastung bis zum elektrischen Durchschlag gemessen. Da die elektrische Festigkeit des Isoliersystems bei Betriebsbeanspruchung mehrere Jahrzehnte beträgt, erfolgen die elektrischen Dauertests bei mehrfach überhöhten elektrischen Feldstärken.

Die in Figur 3 gezeigte Grafik stellt die Mittelwerte der elektrischen Lebensdauer von jeweils sieben Probekörpern bei drei verschiedenen Feldbelastungen für jeweils ein Standardisoliersystem (Glimmer) und ein nanopartikulär/Silan gefülltes Isoliersystem dar. Die ungefüllten Systeme (Bezeichnung Micalastic) weisen dabei einen Anteil von ca. 50 Gew.-% Glimmer und 50 Gew.-% Harz auf. Der angegebene Anteil an Nanopartikeln reduziert entsprechend den Anteil an Harz. Der Anteil Glimmer bleibt jeweils konstant.

Die in Figur 3 gezeigten Lebensdauerkurven ungefüllter und nanopartikulär gefüllter Hochspannungsisoliersysteme (Micalastic (schwarz) und Micalastic mit Nanopartikeln 20 Gew.-% (Durchmesser ca. 20 nm, SiO₂) und Nanopartikeln 5 Gew.-% (Durchmesser ca. 5 nm, SiO₂) zeigen deutlich, dass die letztgenannten Systeme eine deutlich verlängerte Lebensdauer bei gleicher Belastung zeigen.

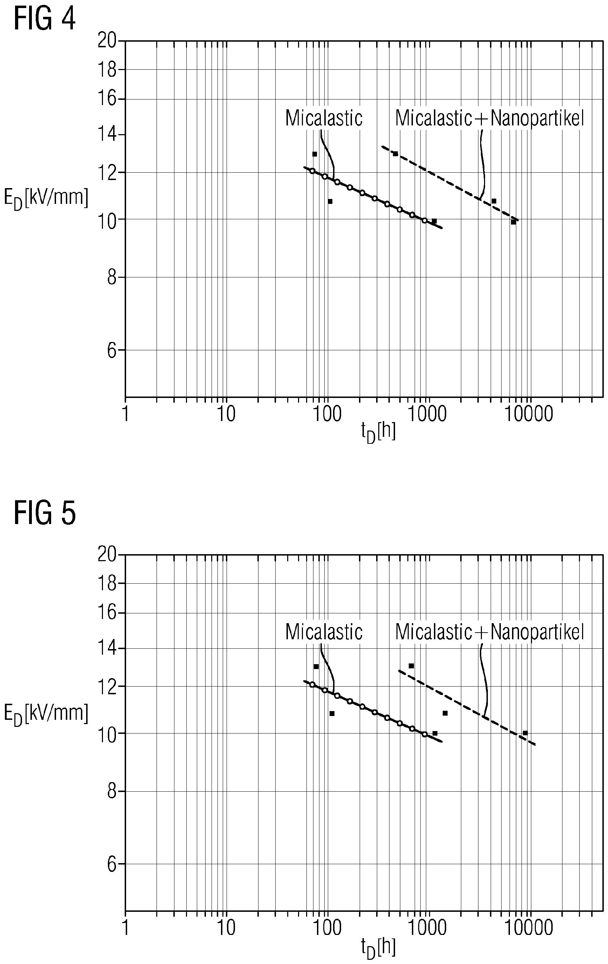

Figur 4 zeigt entsprechende Lebensdauerkurven ungefüllter und nanopartikulär gefüllter Hochspannungsisoliersysteme (Micalastic (schwarz) und Micalastic mit Nanopartikeln 20 Gew.-% (Durchmesser ca. 20 nm, SiO₂) und Nanopartikeln 5 Gew.-% (Durchmesser ca. 5 nm, Al₂O₃). Auch hier wieder die nahezu parallele Verschiebung der Lebensdauern zu längeren Zeiten hin gut zu erkennen.

Schließlich zeigt noch Figur 5 die Lebensdauerkurven ungefüllter und nanopartikulär gefüllter Hochspannungsisoliersysteme (Micalastic (schwarz) und Micalastic mit Nanopartikeln 25 Gew.-% (Durchmesser ca. 20 nm, SiO₂) und Nanopartikeln 2,5 Gew.-% (Durchmesser ca. 5 nm, SiO₂).

Vergleicht man die Lebensdauer der jeweiligen Kollektive, zeigt sich, dass man Verbesserungen in der Lebensdauer um einen Faktor bis 10 erreicht. Beide Lebensdauerverläufe weisen die gleiche Steigung auf, so dass eine direkte Übertragung der Lebensdauerverlängerung auf Betriebsverhältnisse zulässig erscheint.

Dabei sind Isolierungen mit einem nanopartikulärem Anteil bis zu 35 Gew.-% möglich.

Die Erfindung zeigt erstmals den überraschenden erosionsinhibierenden Effekt von bimodal vorliegendem nanopartikulären Füllstoff. Es wird diskutiert, ob die guten Ergebnisse, wie sie in Figuren 3 bis 5 verdeutlicht sind, auf eine Art Partikelvernetzung der Nanopartikel durch Agglomeration untereinander zurückzuführen ist. Jedenfalls kann eindrucksvoll gezeigt werden, dass die Beimischung einer zweiten, bevorzugt kleineren Fraktion nanopartikulärem Füllstoffs erhebliche Vorteile bringen kann.

## Patentansprüche

1. Verfahren zur Herstellung eines Isoliersystems mit verbesserter Teilentladungsbeständigkeit folgende Verfahrensschritte umfassend:
- Bereitstellen eines Isolierbandes welches ein Glimmerpapier und einen Trägerwerkstoff umfasst, die mittels eines Klebers miteinander verklebt sind,
- Umwickeln eines elektrischen Leiters mit dem Isolierband und
- Imprägnieren des um den Leiter gewickelten Isolierbandes mit Kunstharz, das einen nanopartikulären Füllstoff umfasst,
**dadurch gekennzeichnet, dass**
der nanopartikuläre Füllstoff in bimodaler Form, als Kombination zweier Fraktionen, vorliegt, wobei die beiden Fraktionen des nanopartikulärem Füllstoffs sich in ihrer durchschnittlichen Partikelgröße unterscheiden und die zweite Fraktion kleiner als die erste ist, wobei
- die erste Fraktion eine durchschnittliche Partikelgröße im Bereich von 10 bis 50 nm hat
- die kleinere Fraktion einen durchschnittlichen Partikeldurchmesser von 1 bis 7 nm hat
- das Material zumindest einer Fraktion des nanopartikulären Füllstoffs ausgewählt ist aus der Gruppe der Metalloxide, Metallnitride, Metallsulfide und/oder Metallcarbide und
- der nanopartikuläre Füllstoff im Kunstharz in einer Konzentration zwischen 3 und 80 Gew% vorliegt.

2. Isoliersystem mit verbesserter Teilentladungsbeständigkeit, das ein um einen elektrischen Leiter gewickeltes Isolierband hat, welches ein mit einem Trägerwerkstoff verbundenes Glimmerband umfasst, wobei das Isolierband mit einem Kunstharz imprägniert ist, **dadurch gekennzeichnet, dass** das imprägnierte Isolierband mit einem nanopartikulären Füllstoff durchsetzt ist, der bimodal, in Form zweier Fraktionen an nanopartikulärem Füllstoff, vorliegt, wobei die beiden Fraktionen des nanopartikulärem Füllstoffs sich in ihrer durchschnittlichen Partikelgröße unterscheiden und die zweite Fraktion kleiner als die erste ist, wobei
- die erste Fraktion eine durchschnittliche Partikelgröße im Bereich von 10 bis 50 nm hat
- die kleinere Fraktion einen durchschnittlichen Partikeldurchmesser von 1 bis 7 nm hat
- das Material zumindest einer Fraktion des nanopartikulären Füllstoffs ausgewählt ist aus der Gruppe der Metalloxide, Metallnitride, Metallsulfide und/oder Metallcarbide und
- der nanopartikuläre Füllstoff im Kunstharz in einer Konzentration zwischen 3 und 80 Gew% vorliegt.

3. Isoliersystem nach Anspruch 2, **dadurch gekennzeichnet, dass** die kleinere Fraktion an nanopartikulärem Füllstoff in geringerer Menge vorliegt als die Fraktion mit den größeren Partikeln.

4. Isoliersystem nach einem der vorstehenden Ansprüche 2 oder 3, **dadurch gekennzeichnet, dass** die Harzbasis des Kunstharzsystems ausgewählt ist aus der Gruppe epoxidbasierter Harze und/oder Polyurethane.

5. Isoliersystem nach einem der vorstehenden Ansprüche 2 bis 4, **dadurch gekennzeichnet, dass** als Haftvermittler eine siliziumorganische Verbindung eingesetzt wird.

6. Isoliersystem nach einem der Ansprüche 2 bis 5, wobei der Haftvermittler in einer Konzentration von 0,1 bis 45 Gew% im Kunstharz vorliegt.

## Claims

1. Method for producing an insulating system having improved partial discharge resistance, comprising the following method steps:
- providing an insulating tape which comprises a mica paper and a carrier material, which are bonded to one another by means of an adhesive,
- enwinding an electrical conductor with the insulating tape, and
- impregnating the insulating tape wound around the conductor with synthetic resin which comprises a nanoparticulate filler,
**characterized in that**
the nanoparticulate filler is present in bimodal form, as a combination of two fractions,
wherein the two fractions of the nanoparticulate filler differ in their average particle size and the second fraction is smaller than the first, wherein
- the first fraction has an average particle size in the range from 10 to 50 nm.
- the smaller fraction has an average particle diameter of 1 to 7 nm
- the material of at least one fraction of the nanoparticulate filler is selected from the group of metal oxides, metal nitrides, metal sulfides and/or metal carbides and
- the nanoparticulate filler is present in the synthetic resin in a concentration of between 3 and 80 wt%.

2. Insulating system with improved partial discharge resistance, having an insulating tape which is wound around an electrical conductor and comprises a mica tape joined to a carrier material, the insulating tape being impregnated with a synthetic resin, **characterized in that** the impregnated insulating tape is interspersed with a nanoparticulate filler which is present bimodally, in the form of two fractions of nanoparticulate filler,
wherein the two fractions of the nanoparticulate filler differ in their average particle size and the second fraction is smaller than the first, wherein
- the first fraction has an average particle size in the range from 10 to 50 nm.
- the smaller fraction has an average particle diameter of 1 to 7 nm
- the material of at least one fraction of the nanoparticulate filler is selected from the group of metal oxides, metal nitrides, metal sulfides and/or metal carbides and
- the nanoparticulate filler is present in the synthetic resin in a concentration of between 3 and 80 wt%.

3. Insulating system according to Claim 2, **characterized in that** the smaller fraction of nanoparticulate filler is present in a smaller amount than the fraction with the larger particles.

4. Insulating system according to either of preceding Claims 2 and 3, **characterized in that** the resin basis of the synthetic resin system is selected from the group of epoxide-based resins and/or polyurethanes.

5. Insulating system according to any of preceding Claims 2 to 4, **characterized in that** an organosilicon compound is used as adhesion promoter.

6. Insulating system according to any of Claims 2 to 5, the adhesion promoter being present in a concentration of 0.1 to 45 wt% in the synthetic resin.

## Revendications

1. Procédé destiné à la fabrication d'un système isolant ayant une résistance aux décharges partielles améliorée, comprenant les étapes de procédé suivantes :
- mise à disposition d'un ruban isolant qui comprend du papier mica et un matériau de support, qui sont collés l'un à l'autre au moyen d'une colle,
- enroulement d'un conducteur électrique avec le ruban isolant et
- imprégnation du ruban isolant enroulé autour du conducteur avec une résine synthétique qui comprend un matériau de remplissage à nanoparticules,
**caractérisé en ce que**
le matériau de remplissage à nanoparticules est présent sous une forme bimodale en tant que combinaison de deux fractions, dans lequel les deux fractions du matériau de remplissage à nanoparticules se différencient par leur taille moyenne de particules et la deuxième fraction est plus petite que la première, dans lequel
- la première fraction a une taille moyenne de particules dans la plage de 10 à 50 nm
- la fraction plus petite a un diamètre moyen de particules de 1 à 7 nm
- la matière d'au moins une fraction du matériau de remplissage à nanoparticules est sélectionnée dans le groupe des oxydes de métaux, des nitrures de métaux, des sulfures de métaux et/ou des carbures de métaux et
- le matériau de remplissage à nanoparticules est présent dans la résine synthétique à une concentration comprise entre 3 et 80 % en poids.

2. Système isolant ayant une résistance aux décharges partielles améliorée qui a un ruban isolant enroulé autour d'un conducteur électrique, qui comprend un ruban de mica relié à un matériau de support, dans lequel le ruban isolant est imprégné d'une résine synthétique, **caractérisé en ce que** le ruban isolant imprégné contient un matériau de remplissage à nanoparticules, qui est présent de manière bimodale sous la forme de deux fractions de matériau de remplissage à nanoparticules, dans lequel les deux fractions du matériau de remplissage à nanoparticules se différencient par leur taille moyenne de particules et la deuxième fraction est plus petite que la première, dans lequel
- la première fraction a une taille moyenne de particules dans la plage de 10 à 50 nm
- la fraction plus petite a un diamètre moyen de particules de 1 à 7 nm
- la matière d'au moins une fraction du matériau de remplissage à nanoparticules est sélectionnée dans le groupe des oxydes de métaux, des nitrures de métaux, des sulfures de métaux et/ou des carbures de métaux et
- le matériau de remplissage à nanoparticules est présent dans la résine synthétique à une concentration comprise entre 3 et 80 % en poids.

3. Système isolant selon la revendication 2, **caractérisé en ce que** la fraction plus petite de matériau de remplissage à nanoparticules est présente dans une quantité plus petite que la fraction ayant les particules plus grosses.

4. Système isolant selon l'une des revendications précédentes 2 ou 3, **caractérisé en ce que** la base de résine du système de résine synthétique est sélectionnée dans le groupe des résines à base d'époxy et/ou des polyuréthanes.

5. Système isolant selon l'une des revendications précédentes 2 à 4, **caractérisé en ce que** l'on recourt à un composé organique à base de silicium en tant qu'agent adhésif.

6. Système isolant selon l'une des revendications 2 à 5, dans lequel l'agent adhésif est présent dans la résine synthétique à une concentration de 0,1 à 45 % en poids.
